# EUROPEAN PATENT SPECIFICATION

(11) **EP 4 191 426 B1**
(45) Date of publication and mention of the grant of the patent: **11.11.2026**
(21) Application number: 22187690.7
(22) Date of filing: 29.07.2022
(51) Int. Cl.: G06F 13/42, G06F 11/10, H04L 1/24, G06F 11/07

(54) **SERIAL PERIPHERAL INTERFACE INTEGRATED CIRCUIT AND OPERATION METHOD THEREOF**
INTEGRIERTE SCHALTUNG MIT SERIELLER PERIPHERIESCHNITTSTELLE UND VERFAHREN ZU DEREN BETRIEB
CIRCUIT INTÉGRÉ À INTERFACE PÉRIPHÉRIQUE EN SÉRIE ET SON PROCÉDÉ DE FONCTIONNEMENT

(30) Priority: 06.12.2021 US 202117543673
(43) Date of publication of application: 07.06.2023
(73) Proprietor: Himax Technologies Limited, Tainan City 74148 (TW)
(72) Inventor: WEN, Shan-Chieh, 74148 Tainan City (TW); WENG, Ming-Huai, 74148 Tainan City (TW); LIN, Guei-Lan, 74148 Tainan City (TW); CHIANG, Che-Hao, 74148 Tainan City (TW); LIN, Chi-Cheng, 74148 Tainan City (TW)
(74) Representative: Klang, Alexander H.

(56) References cited:
- US-A1- 2006 236 204
- US-A1- 2021 374 022

## Description

### BACKGROUND

### Technical Field

The disclosure relates to an integrated circuit, and in particular, relates to a serial peripheral interface integrated circuit and an operation method thereof.

### Description of Related Art

In some product applications, a plurality of integrated circuits (ICs) may be required to work together. For instance, in the application of a large touch display IC (LTDI), a plurality of (e.g., 30) driving ICs work together to drive the same large touch display panel. The serial peripheral interface (SPI) architecture may provide a multi-drop driving architecture. In the SPI multi-drop driving architecture, the master IC may connect/drive a plurality of slave ICs through the same wire (channel). When different ICs pass through the SPI channel, the transmission signal of the SPI channel may be distorted due to external influences.

### Related Art

### Patent Document

US20060236204A1 discloses a memory device with the serial transmission interface and an error correction method for the serial transmission interface. The memory device comprises an error correction mechanism to detect or automatically correct the error earlier to make sure the correctness of the data transmission while the serial transmission interface accesses the memory. Further, the action of error corrections and data re-transmissions performed by the master device can be reduced.

### SUMMARY

The disclosure provides a serial peripheral interface (SPI) integrated circuit (IC) and an operation method thereof capable of protecting data transmitted through a SPI channel and/or ensuring accuracy of the data received through the SPI channel.

In an embodiment of the disclosure, the SPI IC includes a core circuit and a debugging circuit. The debugging circuit is coupled to the core circuit. When the SPI IC is a master IC of a SPI architecture, the core circuit generates first command information for a slave IC in the SPI architecture, the debugging circuit generates first debugging information corresponding to the first command information, and the SPI IC sends the first command information and the first debugging information to the slave IC in the SPI architecture through a SPI channel. When the SPI IC is the slave IC in the SPI architecture, the debugging circuit receives second command information and second debugging information sent by the master IC through the SPI channel, and the debugging circuit checks the second command information by using the second debugging information. When the SPI IC is the slave IC of the SPI architecture and the SPI IC is a target slave circuit selected by the master IC of the SPI architecture, the core circuit executes the second command information sent by the master IC under a condition that the second command information is checked by the debugging circuit and is correct.

In an embodiment of the disclosure, the operation method includes the following steps. When a SPI IC is a master IC of a SPI architecture, first command information for a slave IC in the SPI architecture is generated, first debugging information corresponding to the first command information is generated, and the first command information and the first debugging information are sent to the slave IC in the SPI architecture through a SPI channel. When the SPI IC is the slave IC in the SPI architecture, second command information and second debugging information sent by the master IC are received through the SPI channel, and the second command information is checked by using the second debugging information. Further, when the SPI IC is the slave IC of the SPI architecture and the SPI IC is a target slave circuit selected by the master IC of the SPI architecture, the second command information sent by the master IC is executed under a condition that the second command information is checked and is correct.

To sum up, according to practical application scenarios, the SPI IC provided by the embodiments of the disclosure may act as the master IC or the slave IC of the SPI architecture. When the SPI IC is the master IC, the SPI IC may generate the debugging information corresponding to the command information and may send the command information and the debugging information to the slave IC through the SPI channel. When the SPI IC is the slave IC, in the case that the SPI IC is the target slave circuit selected by the master IC of the SPI architecture, the SPI IC may receive the command information and the debugging information sent by the master IC through the SPI channel, and the SPI IC may check the command information by using the debugging information. When the command information is checked and is correct, the SPI IC may execute the command information sent by the master IC. Therefore, the SPI IC may protect the data sent through the SPI channel and/or ensure accuracy of the data received through the SPI channel.

The invention is as defined by the independent claims 1 and 13. Preferred embodiments are set out in the dependent claims.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of circuit blocks of a serial peripheral interface (SPI) architecture according to an embodiment of the disclosure.
FIG. 2 is a schematic diagram of circuit blocks of a SPI architecture according to another embodiment of the disclosure.
FIG. 3 is a schematic diagram of circuit blocks of SPI integrated circuits according to an embodiment of the disclosure.
FIG. 4 is a schematic flow chart of an operation method of a SPI integrated circuit according to an embodiment of the disclosure.
FIG. 5 is a schematic flow chart of an operation method of a SPI integrated circuit according to another embodiment of the disclosure.

### DESCRIPTION OF THE EMBODIMENTS

The term "coupled to (or connected to)" used in the entire disclosure (including claims) refers to any direct or indirect connecting means. For instance, if the disclosure describes a first apparatus is coupled to (or connected to) a second apparatus, the description should be explained as the first apparatus is connected directly to the second apparatus, or the first apparatus, through connecting other apparatus or using certain connecting means, is connected indirectly to the second apparatus. In addition, terms such as "first" and "second" in the entire specification (including claims) are used only to name the elements or to distinguish different embodiments or scopes and should not be construed as the upper limit or lower limit of the number of any element and should not be construed to limit the order of the elements. Moreover, elements/components/steps with the same reference numerals represent the same or similar parts in the figures and embodiments where appropriate. Descriptions of the elements/components/steps with the same reference numerals or terms in different embodiments may be references for one another.

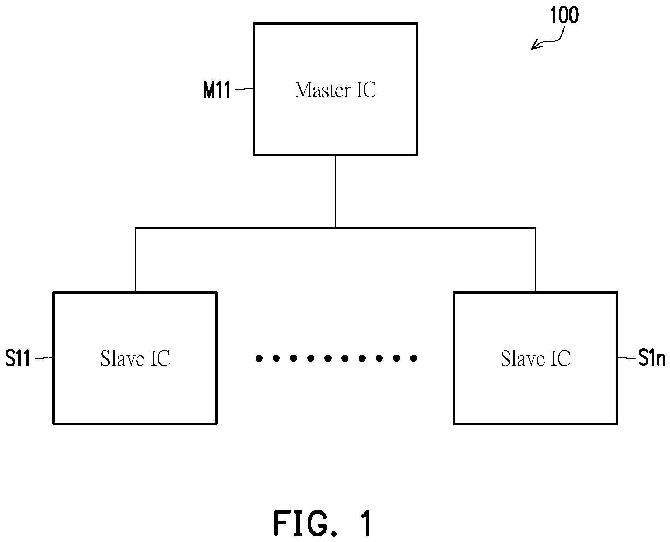

FIG. 1 is a schematic diagram of circuit blocks of a serial peripheral interface (SPI) architecture 100 according to an embodiment of the disclosure. In the embodiment shown in FIG. 1, the SPI architecture 100 may be a multi-drop driving architecture. The SPI architecture 100 includes a plurality of integrated circuits (ICs), such as a master IC M11 and slave ICs S11, ..., and S1n, for example. A number n of the slave ICs S11 to S1n may be determined according to practical design. In the SPI architecture 100, the slave ICs S11 to S1n are connected to the master IC M11 together. The master IC M11 and the slave ICs S11 to S1n are given/defined with different exclusive identification codes.

The master IC M11 may send a command (or data) and a clock signal compliant with the SPI specification to the slave ICs S11 to S1n through a SPI channel/interface. The master IC M11 may select any one among the slave ICs S11 to S1n as a target slave circuit through the SPI channel/interface, and the target slave circuit may execute (process) the command (or data) sent by the master IC M11. When any one among the slave ICs S11 to S1n determines that it itself is not the target slave circuit selected by the master IC M11, the unselected slave IC may ignore (do not process) the command (data) of the master IC M11.

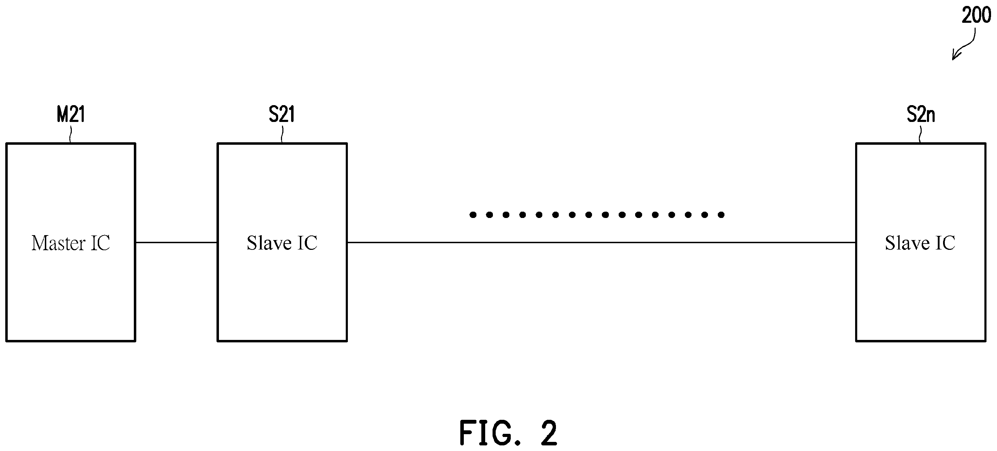

FIG. 2 is a schematic diagram of circuit blocks of a SPI architecture 200 according to another embodiment of the disclosure. In the embodiment shown in FIG. 2, the SPI architecture 200 may be a daisy-chain architecture. The SPI architecture 200 includes a plurality of ICs connected in series, such as a master IC M21 and slave ICs S21, ..., and S2n, for example. A number n of the slave ICs S21 to S1n may be determined according to practical design. In the daisy-chain SPI architecture 200, the slave ICs S21 to S2n are connected in series to form a daisy chain, and the master IC M21 is connected to the first slave IC S21 in the daisy chain. The master IC M21 and the slave ICs S21 to S2n are given/defined with different exclusive identification codes. The master IC M21 may send a command (or data) and a clock signal compliant with the SPI specification to the daisy chain through a SPI channel/interface, and any slave ICs S21 to S2n in the daisy chain may transmit the command (or data) and the clock signal from the previous IC to the subsequent IC.

The master IC M21 may select any one among the slave ICs S21 to S2n as the target slave circuit through the SPI channel/interface. That is, each one of the slave ICs S21 to S2n may decode the command (or data) from the previous IC to determine whether it is the target slave circuit selected by the master IC M21. The target slave circuit may further execute (process) the command (data) sent by the master IC M21. When any one among the slave ICs S21 to S2n determines that it itself is not the target slave circuit selected by the master IC M21, the unselected slave IC may ignore (do not process) the command (data) of the master IC M21.

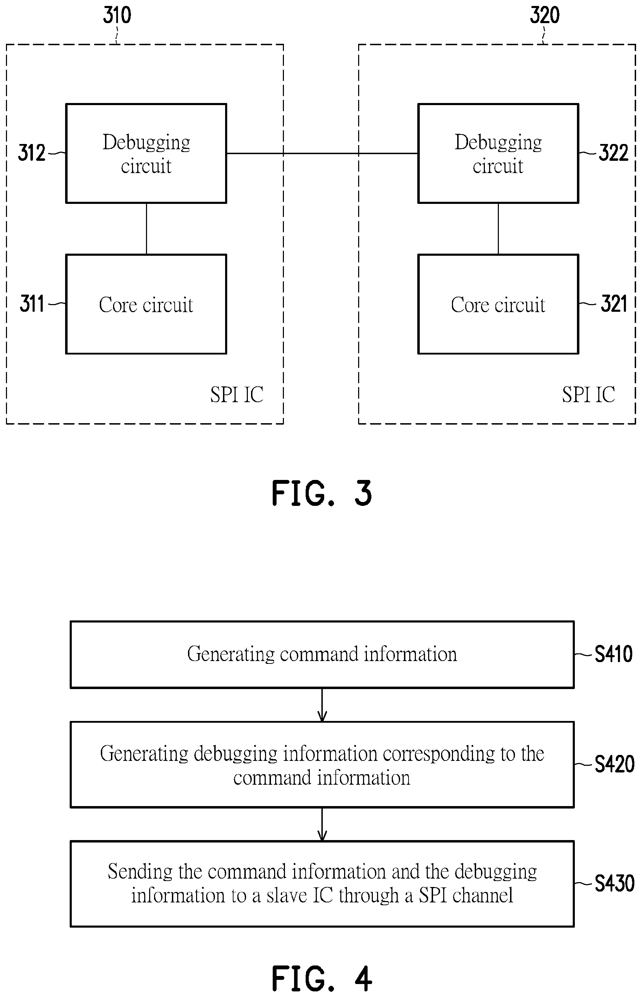

FIG. 3 is a schematic diagram of circuit blocks of SPI ICs according to an embodiment of the disclosure. FIG. 3 illustrates a SPI IC 310 and a SPI IC 320. Herein, the SPI IC 310 may act as the master IC (e.g., the master IC M11 shown in FIG. 1 or the master IC M21 shown in FIG. 2) in the SPI architecture, and the SPI IC 320 may act as the slave IC (e.g., one of the slave ICs S11 to S1n shown in FIG. 1 or one of the slave ICs S21 to S2n shown in FIG. 2) in the SPI architecture. The SPI IC 310 is coupled to the SPI IC 320 through a SPI channel (SPI interface). The SPI IC 310 may send a command (or data) and a clock signal compliant with the SPI specification to the slave SPI IC 320 through the SPI channel. Based on an execution result of the command and/or a processing result of the data, the SPI IC 320 may return the data to the SPI IC 310 through the SPI channel.

FIG. 4 is a schematic flow chart of an operation method of a SPI IC according to an embodiment of the disclosure. With reference to FIG. 3 and FIG. 4, the SPI IC 310 acting as the master IC includes a core circuit 311 and a debugging circuit 312. The debugging circuit 312 is coupled to the core circuit 311. In step S410, the core circuit 311 may generate command information for the SPI IC 320 (slave IC in the SPI architecture, i.e., the target slave circuit), and this command information (first command information) may include a command (data) compliant with the SPI specification. In some practical designs, this command information may include an exclusive identification code (chip identification code) of the target slave circuit. In some other practical designs, this command information may include a chip identification code and a command code compliant with the SPI specification.

In still some other practical designs, this command information may include a data error correcting flag, a chip identification code, and a command code compliant with the SPI specification. The data error correcting flag is used to notify the SPI IC 320 whether to enable an error correcting operation on the data information provided by the SPI IC 310 (detailed description is provided in following paragraphs). For instance, the core circuit 311 may set the data error correcting flag to notify the SPI IC 320 (slave IC) to enable the error correcting operation on the data information. Alternatively, the core circuit 311 may reset the data error correcting flag to notify the SPI IC 320 to disable the error correcting operation on the data information.

In step S420, the debugging circuit 312 generates debugging information (first debugging information) corresponding to the command information. Specific implementation of generation of the debugging information by the debugging circuit 312 is not limited in this embodiment. For instance, in some practical designs, the debugging information may include an error-correcting code (ECC), that is, the debugging circuit 312 may perform an ECC algorithm on the command information to generate the debugging information. In some other practical designs, the debugging circuit 312 may perform a checksum algorithm or other debugging algorithms on the command information to generate the debugging information.

In step S430, the debugging circuit 312 (or the core circuit 311) transmits the command information and the debugging information to the SPI IC 320 through the SPI channel. After transmission of the command information and the debugging information is completed, the core circuit 311 further generates data information (first data information) corresponding to the command information (first command information) and transmit the data information to the SPI IC 320 through the SPI channel. According to practical design, the data information may include an address field, a data field, and/or other fields compliant with the SPI specification.

According to practical design, in some embodiments, the debugging circuit 312 further generates debugging information (third debugging information) corresponding to the data information. The debugging circuit 312 (or the core circuit 311) sends the data information and the third debugging information to the SPI IC 320 through the SPI channel. Specific implementation of generation of the third debugging information by the debugging circuit 312 is not limited in this embodiment. For instance, in some practical designs, the third debugging information may include a cyclic redundancy check (CRC) code, that is, the debugging circuit 312 may perform a CRC algorithm on the data information to generate the third debugging information. In some other practical designs, the debugging circuit 312 may perform a checksum algorithm or other debugging algorithms on the data information to generate the third debugging information.

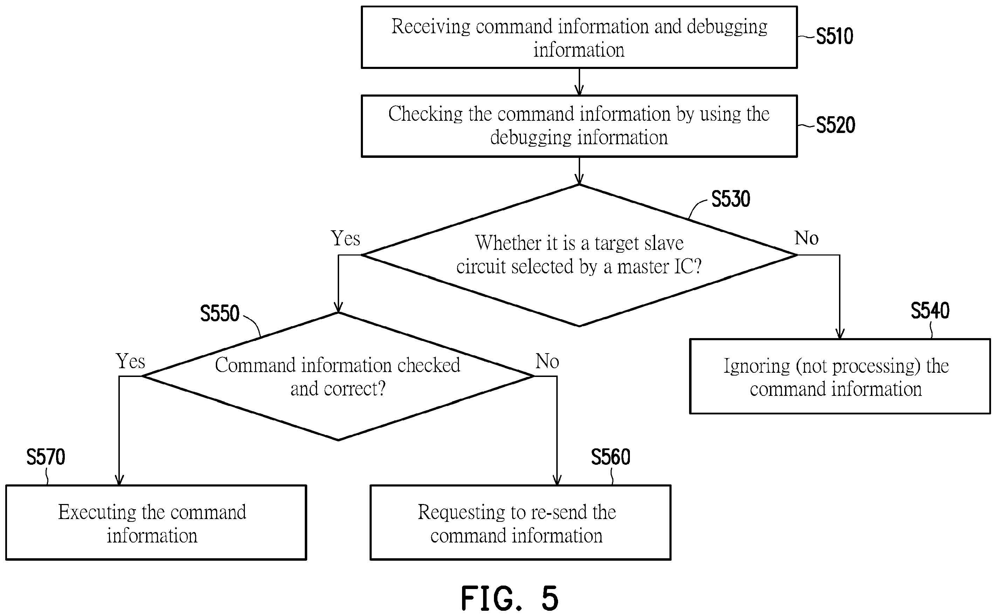

FIG. 5 is a schematic flow chart of an operation method of a SPI IC according to another embodiment of the disclosure. With reference to FIG. 3 and FIG. 5, the SPI IC 320 acting as the slave IC in the SPI architecture includes a core circuit 321 and a debugging circuit 322. The debugging circuit 322 is coupled to the core circuit 321. In step S510, the debugging circuit 322 receives command information (second command information) and debugging information (second debugging information) sent by the SPI IC 310 (master IC) through the SPI channel. In some practical designs, this command information may include a chip identification code (exclusive identification code), a data error correcting flag, a SPI command code, and/or other data. In some practical designs, the debugging information includes an error-correcting code (ECC), a checksum code, or other debugging information. In step S520, the debugging circuit 322 checks the command information by using the debugging information.

The SPI IC 320 (slave IC) may decode the command information from the SPI IC 310 (master IC) to determine whether the SPI IC 320 itself is the target slave circuit selected by the SPI IC 310. When the SPI IC 320 is not the target slave circuit selected by the SPI IC 310 ("No" is determined in step S530), the core circuit 321 may perform step S540. That is, the core circuit 321 may ignore (do not process) the command information from the SPI IC 310. When the SPI IC 320 is the target slave circuit selected by the SPI IC 310 ("Yes" is determined in step S530), the core circuit 321 may perform step S550, so as to determine whether the command information from the SPI IC 310 is checked and is correct.

Based on the checking performed in step S520, when the debugging circuit 32 checks that the command information is wrong ("No" is determined in step S550), the debugging circuit 322 may perform step S560. In step S560, the debugging circuit 322 may return error information (e.g., an error flag) to the SPI IC 310 to notify/request the SPI IC 310 to re-send the command information through the SPI channel. When the SPI IC 320 notifies that the command information is wrong, the core circuit 311 of the SPI IC 310 may re-send the command information to the SPI IC 320 through the SPI channel.

When the debugging circuit 322 checks that the command information is correct ("Yes" is determined in step S550), the core circuit 321 performs step S570 to execute the command information sent by the SPI IC 310 (master IC). In the process of executing the command information, the debugging circuit 322 receives the data information (second data information) corresponding to the command information sent by the SPI IC 310 through the SPI channel. According to practical design, the data information may include an address field, a data field, and/or other fields compliant with the SPI specification.

When the data error correcting flag is set, the debugging circuit 322 may further receive debugging information (fourth debugging information) corresponding to the data information through the SPI channel. In some practical designs, the fourth debugging information may include a CRC code, a checksum algorithm, or other debugging information. The debugging circuit 322 checks the command information by using the fourth debugging information. When the debugging circuit 322 checks that the data information is correct, the core circuit 321 processes the data information sent by the SPI IC 310 (master IC). When the debugging circuit 322 checks that one bit (or a plurality of bits) of the data information is wrong, the debugging circuit 322 may repair the data information by using the fourth debugging information.

When the debugging circuit 322 determines that the use of the fourth debugging information is not sufficient to repair the data information that has an error, the debugging circuit 322 may return error information (e.g., an error flag) to the SPI IC 310 (master IC) to notify/request the SPI IC 310 to re-send the data information through the SPI channel. When the SPI IC 320 notifies that the data information is wrong, the core circuit 311 of the SPI IC 310 may re-send the data information to the SPI IC 320 through the SPI channel.

In still some other practical designs, the command information from the SPI IC 310 may include a data error correcting flag. The SPI IC 320 may determine whether to enable the error correcting operation on the data information provided by the SPI IC 310 according to the data error correcting flag from the SPI IC 310. For instance, when the data error correcting flag is enabled, the debugging circuit 322 may check the data information from the SPI IC 310 by using the fourth debugging information. When the data error correcting flag is disabled, the debugging circuit 322 may not check the data information.

In view of the foregoing, in a system having multiple chips connected in series, the master IC may select one chip (slave IC) by using the chip identification code and issue a command to read and write the selected chip. In some embodiments, the master IC and the slave IC may protect the chip identification code and the command by using ECC. If an error occurs in the transmission of the chip identification code and the command, the slave IC may request the master IC to re-send to repair the chip identification code and the command. Therefore, the master IC and the slave IC may ensure accuracy of the chip identification code and the command. After it is ensured that the chip identification code and the command are successfully sent, the master IC may then send an address and data to the slave IC. The master IC and the slave IC may confirm accuracy of the address and data by using CRC. If an error occurs in the transmission of the address and data, the slave IC may repair the address and data in time or return an error signal to the master IC to re-send the address and data.

According to different design needs, the core circuit 311, the debugging circuit 312, the core circuit 321, and/or the debugging circuit 322 may be implemented in the form of hardware, firmware, software (i.e., a program), or a combination of the majority of the foregoing three. In the form of hardware, the core circuit 311, the debugging circuit 312, the core circuit 321, and/or the debugging circuit 322 may be implemented in the form of a logic circuit on an IC. Related functions of the core circuit 311, the debugging circuit 312, the core circuit 321, and/or the debugging circuit 322 may be implemented as hardware through using hardware description languages (e.g., Verilog HDL or VHDL) or other suitable programming languages. For instance, the related function of the core circuit 311, the debugging circuit 312, the core circuit 321, and/or the debugging circuit 322 may be implemented in one or a plurality of controllers, a micro controller, a micro processor, an application-specific integrated circuit (ASIC), a digital signal processor (DSP), a field programmable gate array (FPGA), and/or various logic blocks, module, and circuits in other processing units.

In the form of software and/or firmware, the related functions of the core circuit 311, the debugging circuit 312, the core circuit 321, and/or the debugging circuit 322 may be implemented as programming codes. For instance, the core circuit 311, the debugging circuit 312, the core circuit 321, and/or the debugging circuit 322 may be implemented by using a general programming language (e.g., C, C++, or an assembly language) or other suitable programming languages. The programming codes may be recorded/stored in a "non-transitory computer readable medium". In some embodiments, the non-transitory computer readable medium includes, for example, a ready only memory (ROM), a semiconductor memory, a programmable logic circuit, and/or a storage device. The storage device includes a hard disk drive (HDD) a solid-state drive (SSD), or other storage devices. A central processing unit (CPU), a controller, a micro controller, or a micro processor may read and execute the programming code from the non-transitory computer readable medium to accomplish the related functions of the core circuit 311, the debugging circuit 312, the core circuit 321, and/or the debugging circuit 322.

## Claims

1. A serial peripheral interface , SPI integrated circuit , SPI IC (310, 320), comprising:
a core circuit (311, 321); and
a debugging circuit (312, 322), coupled to the core circuit (311, 321), wherein the SPI IC (310, 320) is configured to be connected to a SPI bus to serve as one of a master IC in a SPI architecture and a slave IC in the SPI architecture,
in response to that the SPI IC (310, 320) is the master IC of the SPI architecture, the core circuit (311, 321) generates first command information for the slave IC in the SPI architecture, the debugging circuit (312, 322) generates first debugging information corresponding to the first command information, and the first command information and the first debugging information are sent to the slave IC in the SPI architecture through a SPI channel, wherein the core circuit (311, 321) further generates first data information corresponding to the first command information, the debugging circuit (312, 322) generates third debugging information corresponding to the first data information, and the first data information and the third debugging information are sent to the slave IC in the SPI architecture through the SPI channel,
in response to that the SPI IC is the slave IC of the SPI architecture, the debugging circuit (312, 322) receives second command information and second debugging information sent by the master IC through the SPI channel, and the debugging circuit (312, 322) checks the second command information by using the second debugging information, and
in response to that the SPI IC (310, 320) is the slave IC of the SPI architecture and the SPI IC (310, 320) is a target slave circuit selected by the master IC of the SPI architecture, the core circuit (311, 321) executes the second command information sent by the master IC under a condition that the second command information is checked by the debugging circuit (312, 322) and is correct, wherein the debugging circuit (312, 322) receives second data information corresponding to the second command information sent by the master IC and receives fourth debugging information corresponding to the second data information, the debugging circuit (312, 322) checks the second data information by using the fourth debugging information, and the core circuit (311, 321) further processes the second data information sent by the master IC under a condition that the second data information is checked by the debugging circuit (312, 322) and is correct.

2. The SPI IC (310, 320) according to claim 1, wherein in response to that the SPI IC (310, 320) is the master IC of the SPI architecture and the slave IC in the SPI architecture notifies that the first command information is wrong, the core circuit (311, 321) re-sends the first command information to the slave IC through the SPI channel.

3. The SPI IC (310, 320) according to claim 1, wherein in response to that the SPI IC (310, 320) is the slave IC of the SPI architecture and the second command information is checked by the debugging circuit (312, 322) and is wrong, the debugging circuit (312, 322) notifies the master IC of the SPI architecture to re-send the second command information through the SPI channel.

4. The SPI IC (310, 320) according to claim 1, wherein the first debugging information comprises a first error-correcting code, and the second debugging information comprises a second error-correcting code.

5. The SPI IC (310, 320) according to claim 1, wherein the first command information comprises a first chip identification code and a first command code, and the second command information comprises a second chip identification code and a second command code.

6. The **SPI** IC (310, 320) according to claim 5, wherein the first command information further comprises a first data error correcting flag, and the second command information further comprises a second data error correcting flag.

7. The SPI IC (310, 320) according to claim 1, wherein in response to that the SPI IC (310, 320) is the master IC of the SPI architecture and the slave IC in the SPI architecture notifies that the first data information is wrong, the core circuit (311, 321) re-sends the first data information to the slave IC through the SPI channel.

8. The SPI IC (310, 320) according to claim 1, wherein in response to that the SPI IC (310, 320) is the slave IC of the SPI architecture and the debugging circuit (312, 322) checks that one bit of the second data information is wrong, the debugging circuit (312, 322) repairs the second data information by using the fourth debugging information.

9. The SPI IC (310, 320) according to claim 8, wherein in response to that the SPI IC (310, 320) is the slave IC of the SPI architecture and the debugging circuit (312, 322) determines that the use of the fourth debugging information is not sufficient to repair the second data information that has an error, the debugging circuit (312, 322) notifies the master IC of the SPI architecture to re-send the second data information through the SPI channel.

10. The SPI IC (310, 320) according to claim 1, wherein the third debugging information comprises a first cyclic redundancy check code, and the fourth debugging information comprises a second cyclic redundancy check code.

11. The SPI IC (310, 320) according to claim 1, wherein the first data information comprises a first address field and a first data field, and the second data information comprises a second address field and a second data field.

12. The SPI IC (310, 320) according to claim 1, wherein
the first command information comprises a first data error correcting flag,
in response to that the SPI IC (310, 320) is the master IC of the SPI architecture, the core circuit (311, 321) sets the first data error correcting flag to notify the slave IC in the SPI architecture to enable an error correcting operation on the first data information, or the core circuit (311, 321) resets the first data error correcting flag to notify the slave IC in the SPI architecture to disable the error correcting operation on the first data information,
the second command information comprises a second data error correcting flag,
in response to that the SPI IC (310, 320) is the slave IC of the SPI architecture, the SPI IC (310, 320) is the target slave circuit selected by the master IC of the SPI architecture, and the second data error correcting flag is enabled, the debugging circuit (312, 322) checks the second data information by using the fourth debugging information, and
in response to that the SPI IC (310, 320) is the slave IC of the SPI architecture, the SPI IC (310, 320) is the target slave circuit selected by the master IC of the SPI architecture, and the second data error correcting flag is disabled, the debugging circuit (312, 322) does not check the second data information.

13. An operation method of a serial peripheral interface , SPI integrated circuit , SPI IC (310, 320), comprising:
the SPI IC (310, 320) is configured to be connected to a SPI bus to serve as one of a master IC in a SPI architecture and a slave IC in the SPI architecture,
in response to that the SPI IC (310, 320) is the master IC of the SPI architecture,
generating first command information for the slave IC in the SPI architecture, generating first debugging information corresponding to the first command information, and sending the first command information and the first debugging information to the slave IC in the SPI architecture through a SPI channel; and
generating first data information corresponding to the first command information, generating third debugging information corresponding to the first data information, and sending the first data information and the third debugging information to the slave IC in the SPI architecture through the SPI channel;
in response to that the SPI IC (310, 320) is the slave IC of the SPI architecture, receiving second command information and second debugging information sent by the master IC through the SPI channel and checking the second command information by using the second debugging information; and
in response to that the SPI IC (310, 320) is the slave IC of the SPI architecture and the SPI IC (310, 320) is a target slave circuit selected by the master IC of the SPI architecture,
executing the second command information sent by the master IC under a condition that the second command information is checked and is correct; and
receiving second data information corresponding to the second command information sent by the master IC and receiving fourth debugging information corresponding to the second data information, checking the second data information by using the fourth debugging information, and processing the second data information sent by the master IC under a condition that the second data information is checked and is correct.

14. The operation method according to claim 13, further comprising:
in response to that the SPI IC (310, 320) is the master IC of the SPI architecture and the slave IC in the SPI architecture notifies that the first command information is wrong, re-sending the first command information to the slave IC through the SPI channel.

15. The operation method according to claim 13, further comprising:
in response to that the SPI IC (310, 320) is the slave IC of the SPI architecture and the second command information is checked and is wrong, notifying the master IC of the SPI architecture to re-send the second command information through the SPI channel.

16. The operation method according to claim 13, wherein the first debugging information comprises a first error-correcting code, and the second debugging information comprises a second error-correcting code.

17. The operation method according to claim 13, wherein the first command information comprises a first chip identification code and a first command code, and the second command information comprises a second chip identification code and a second command code.

18. The operation method according to claim 17, wherein the first command information further comprises a first data error correcting flag, and the second command information further comprises a second data error correcting flag.

19. The operation method according to claim 13, further comprising:
in response to that the SPI IC (310, 320) is the master IC of the SPI architecture and the slave IC in the SPI architecture notifies that the first data information is wrong, re-sending the first data information to the slave IC through the SPI channel.

20. The operation method according to claim 13, further comprising:
in response to that the SPI IC (310, 320) is the slave IC of the SPI architecture and one bit of the second data information is wrong, repairing the second data information by using the fourth debugging information.

21. The operation method according to claim 20, further comprising:
in response to that the SPI IC (310, 320) is the slave IC of the SPI architecture and the fourth debugging information is not sufficient to repair the second data information that has an error, notifying the master IC of the SPI architecture to re-send the second data information through the SPI channel.

22. The operation method according to claim 13, wherein the third debugging information comprises a first cyclic redundancy check code, and the fourth debugging information comprises a second cyclic redundancy check code.

23. The operation method according to claim 13, wherein the first data information comprises a first address field and a first data field, and the second data information comprises a second address field and a second data field.

24. The operation method according to claim 13, wherein the first command information comprises a first data error correcting flag, the second command information comprises a second data error correcting flag, and the operation method further comprises:
in response to that the SPI IC (310, 320) is the master IC of the SPI architecture, setting the first data error correcting flag to notify the slave IC in the SPI architecture to enable an error correcting operation on the first data information or resetting the first data error correcting flag to notify the slave IC in the SPI architecture to disable the error correcting operation on the first data information;
in response to that the SPI IC (310, 320) is the slave IC of the SPI architecture, the SPI IC (310, 320) is the target slave circuit selected by the master IC of the SPI architecture, and the second data error correcting flag is enabled, checking the second data information by using the fourth debugging information; and
in response to that the SPI IC (310, 320) is the slave IC of the SPI architecture, the SPI IC (310, 320) is the target slave circuit selected by the master IC of the SPI architecture, and the second data error correcting flag is disabled, not checking the second data information.

## Patentansprüche

1. Ein integrierter Schaltkreis für eine serielle Peripherieschnittstelle, SPI-IC (310, 320), aufweisend:
eine Kernschaltung (311, 321); und
eine Debugging-Schaltung (312, 322), die mit der Kernschaltung (311, 321) gekoppelt ist, wobei der SPI-IC (310, 320) so konfiguriert ist, dass er an einen SPI-Bus angeschlossen wird, um entweder als Master-IC in einer SPI-Architektur oder als Slave-IC in der SPI-Architektur zu fungieren,
als Reaktion darauf, dass der SPI-IC (310, 320) der Master-IC der SPI-Architektur ist, die Kernschaltung (311, 321) erste Befehlsinformationen für den Slave-IC in der SPI-Architektur erzeugt, die Debugging-Schaltung (312, 322) erste Debugging-Informationen entsprechend den ersten Befehlsinformationen erzeugt und die ersten Befehlsinformationen sowie die ersten Debugging-Informationen über einen SPI-Kanal an den Slave-IC in der SPI-Architektur gesendet werden, wobei die Kernschaltung (311, 321) ferner erste Dateninformationen erzeugt, die den ersten Befehlsinformationen entsprechen, die Debugging-Schaltung (312, 322) dritte Debugging-Informationen erzeugt, die den ersten Dateninformationen entsprechen, und die ersten Dateninformationen sowie die dritten Debugging-Informationen über den SPI-Kanal an den Slave-IC in der SPI-Architektur gesendet werden,
als Reaktion darauf, dass der SPI-IC der Slave-IC der SPI-Architektur ist, empfängt die Debugging-Schaltung (312, 322) zweite Befehlsinformationen und zweite Debugging-Informationen, die vom Master-IC über den SPI-Kanal gesendet wurden, und die Debugging-Schaltung (312, 322) überprüft die zweiten Befehlsinformationen unter Verwendung der zweiten Debugging-Informationen, und
als Reaktion darauf, dass der SPI-IC (310, 320) der Slave-IC der SPI-Architektur ist und der SPI-IC (310, 320) eine vom Master-IC der SPI-Architektur ausgewählte Ziel-Slave-Schaltung ist, führt die Kernschaltung (311, 321) die vom Master-IC gesendete zweite Befehlsinformation ausführt, unter der Bedingung, dass die zweite Befehlsinformation von der Debugging-Schaltung (312, 322) überprüft wurde und korrekt ist, wobei die Debugging-Schaltung (312, 322) zweite Dateninformationen empfängt, die der vom Master-IC gesendeten zweiten Befehlsinformation entsprechen, sowie vierte Debugging-Informationen, die den zweiten Dateninformationen entsprechen, und die Debugging-Schaltung (312, 322) die zweiten Dateninformationen unter Verwendung der vierten Debugging-Informationen überprüft, und die Kernschaltung (311, 321) die vom Master-IC gesendeten zweiten Dateninformationen weiterverarbeitet, sofern die zweiten Dateninformationen von der Debugging-Schaltung (312, 322) überprüft wurden und korrekt sind.

2. SPI-IC (310, 320) nach Anspruch 1, wobei als Reaktion darauf, dass der SPI-IC (310, 320) der Master-IC der SPI-Architektur ist und der Slave-IC in der SPI-Architektur meldet, dass die erste Befehlsinformation fehlerhaft ist, die Kernschaltung (311, 321) die erste Befehlsinformation über den SPI-Kanal erneut an den Slave-IC sendet.

3. SPI-IC (310, 320) nach Anspruch 1, wobei, als Reaktion darauf, dass der SPI-IC (310, 320) der Slave-IC der SPI-Architektur ist und die zweite Befehlsinformation von der Debugging-Schaltung (312, 322) geprüft und als fehlerhaft befunden wird, die Debugging-Schaltung (312, 322) den Master-IC der SPI-Architektur anweist, die zweite Befehlsinformation über den SPI-Kanal erneut zu senden.

4. SPI-IC (310, 320) nach Anspruch 1, wobei die erste Debugging-Information einen ersten Fehlerkorrekturcode aufweist und die zweite Debugging-Information einen zweiten Fehlerkorrekturcode aufweist.

5. SPI-IC (310, 320) nach Anspruch 1, wobei die erste Befehlsinformation einen ersten Chip-Identifikationscode und einen ersten Befehlscode aufweist und die zweite Befehlsinformation einen zweiten Chip-Identifikationscode und einen zweiten Befehlscode aufweist.

6. SPI-IC (310, 320) nach Anspruch 5, wobei die erste Befehlsinformation ferner ein erstes Datenfehlerkorrektur-Flag aufweist und die zweite Befehlsinformation ferner ein zweites Datenfehlerkorrektur-Flag aufweist.

7. SPI-IC (310, 320) nach Anspruch 1, wobei, als Reaktion darauf, dass der SPI-IC (310, 320) der Master-IC der SPI-Architektur ist und der Slave-IC in der SPI-Architektur meldet, dass die ersten Dateninformationen fehlerhaft sind, die Kernschaltung (311, 321) die ersten Dateninformationen über den SPI-Kanal erneut an den Slave-IC sendet.

8. SPI-IC (310, 320) nach Anspruch 1, wobei, als Reaktion darauf, dass der SPI-IC (310, 320) der Slave-IC der SPI-Architektur ist und die Debugging-Schaltung (312, 322) feststellt, dass ein Bit der zweiten Dateninformation fehlerhaft ist, die Debugging-Schaltung (312, 322) die zweite Dateninformation unter Verwendung der vierten Debugging-Information korrigiert.

9. SPI-IC (310, 320) nach Anspruch 8, wobei, wenn der SPI-IC (310, 320) der Slave-IC der SPI-Architektur ist und die Debugging-Schaltung (312, 322) feststellt, dass die Verwendung der vierten Debugging-Information nicht ausreicht, um die fehlerhafte zweite Dateninformation zu korrigieren, die Debugging-Schaltung (312, 322) den Master-IC der SPI-Architektur anweist, die zweite Dateninformation über den SPI-Kanal erneut zu senden.

10. SPI-IC (310, 320) nach Anspruch 1, wobei die dritte Debugging-Information einen ersten zyklischen Redundanzprüfcode aufweist und die vierte Debugging-Information einen zweiten zyklischen Redundanzprüfcode aufweist.

11. SPI-IC (310, 320) nach Anspruch 1, wobei die erste Dateninformation ein erstes Adressfeld und ein erstes Datenfeld aufweist und die zweite Dateninformation ein zweites Adressfeld und ein zweites Datenfeld aufweist.

12. SPI-IC (310, 320) nach Anspruch 1, wobei
die erste Befehlsinformation weist ein erstes Datenfehlerkorrektur-Flag auf,
als Reaktion darauf, dass der SPI-IC (310, 320) der Master-IC der SPI-Architektur ist, die Kernschaltung (311, 321) das erste Datenfehlerkorrektur-Flag setzt, um dem Slave-IC in der SPI-Architektur mitzuteilen, einen Fehlerkorrekturvorgang für die erste Dateninformation zu aktivieren, oder die Kernschaltung (311, 321) das erste Datenfehlerkorrektur-Flag zurücksetzt, um dem Slave-IC in der SPI-Architektur mitzuteilen, den Fehlerkorrekturvorgang für die erste Dateninformation zu deaktivieren,
die zweite Befehlsinformation weist ein zweites Datenfehlerkorrektur-Flag auf,
als Reaktion darauf, dass der SPI-IC (310, 320) der Slave-IC der SPI-Architektur ist, der SPI-IC (310, 320) die vom Master-IC der SPI-Architektur ausgewählte Ziel-Slave-Schaltung ist und das zweite Datenfehlerkorrektur-Flag gesetzt ist, überprüft die Debugging-Schaltung (312, 322) die zweite Dateninformation unter Verwendung der vierten Debugging-Information, und
wenn der SPI-IC (310, 320) der Slave-IC der SPI-Architektur ist, der SPI-IC (310, 320) die vom Master-IC der SPI-Architektur ausgewählte Ziel-Slave-Schaltung ist und das zweite Datenfehlerkorrektur-Flag deaktiviert ist, überprüft die Debugging-Schaltung (312, 322) die zweiten Dateninformationen nicht.

13. Ein Verfahren zum Betrieb eines integrierten Schaltkreises für eine serielle Peripherieschnittstelle, SPI-IC (310, 320), das folgende Schritte aufweist:
der SPI-IC (310, 320) ist so konfiguriert, dass er an einen SPI-Bus angeschlossen wird, um als Master-IC in einer SPI-Architektur oder als Slave-IC in der SPI-Architektur zu fungieren,
als Reaktion darauf, dass der SPI-IC (310, 320) der Master-IC der SPI-Architektur ist,
Erzeugen von ersten Befehlsinformationen für den Slave-IC in der SPI-Architektur, Erzeugen von ersten Debugging-Informationen, die den ersten Befehlsinformationen entsprechen, und Senden der ersten Befehlsinformationen und der ersten Debugging- sinformationen an den Slave-IC in der SPI-Architektur über einen SPI-Kanal; und
Erzeugen von ersten Dateninformationen, die den ersten Befehlsinformationen entsprechen, Erzeugen von dritten Debugging-Informationen, die den ersten Dateninformationen entsprechen, und Senden der ersten Dateninformationen und der dritten Debugging-Informationen über den SPI-Kanal an den Slave-IC in der SPI-Architektur;
als Reaktion darauf, dass der SPI-IC (310, 320) der Slave-IC der SPI-Architektur ist, Empfangen von zweiten Befehlsinformationen und zweiten Debugging-Informationen, die vom Master-IC über den SPI-Kanal gesendet wurden, und Überprüfen der zweiten Befehlsinformationen unter Verwendung der zweiten Debugging-Informationen; und
als Reaktion darauf, dass der SPI-IC (310, 320) der Slave-IC der SPI-Architektur ist und der SPI-IC (310, 320) eine vom Master-IC der SPI-Architektur ausgewählte Ziel-Slave-Schaltung ist,
Ausführen der vom Master-IC gesendeten zweiten Befehlsinformationen unter der Bedingung, dass die zweiten Befehlsinformationen überprüft wurden und korrekt sind; und
Empfangen von zweiten Dateninformationen, die den vom Master-IC gesendeten zweiten Befehlsinformationen entsprechen, und Empfangen von vierten Debugging-Informationen, die den zweiten Dateninformationen entsprechen, Überprüfen der zweiten Dateninformationen unter Verwendung der vierten Debugging-Informationen und Verarbeiten der vom Master-IC gesendeten zweiten Dateninformationen unter der Bedingung, dass die zweiten Dateninformationen überprüft wurden und korrekt sind.

14. Verfahren zum Betrieb nach Anspruch 13, das ferner aufweist:
als Reaktion darauf, dass der SPI-IC (310, 320) der Master-IC der SPI-Architektur ist und der Slave-IC in der SPI-Architektur meldet, dass die erste Befehlsinformation fehlerhaft ist, erneutes Senden der ersten Befehlsinformation an den Slave-IC über den SPI-Kanal.

15. Verfahren zum Betrieb nach Anspruch 13, das ferner aufweist:
als Reaktion darauf, dass der SPI-IC (310, 320) der Slave-IC der SPI-Architektur ist und die zweite Befehlsinformation überprüft wurde und fehlerhaft ist, das Benachrichtigen des Master-ICs der SPI-Architektur, die zweite Befehlsinformation über den SPI-Kanal erneut zu senden.

16. Verfahren zum Betrieb nach Anspruch 13, wobei die erste Debugging-Information einen ersten Fehlerkorrekturcode aufweist und die zweite Debugging-Information einen zweiten Fehlerkorrekturcode aufweist.

17. Verfahren zum Betrieb nach Anspruch 13, wobei die erste Befehlsinformation einen ersten Chip-Identifikationscode und einen ersten Befehlscode aufweist und die zweite Befehlsinformation einen zweiten Chip-Identifikationscode und einen zweiten Befehlscode aufweist.

18. Verfahren zum Betrieb nach Anspruch 17, wobei die erste Befehlsinformation ferner ein erstes Datenfehlerkorrektur-Flag aufweist und die zweite Befehlsinformation ferner ein zweites Datenfehlerkorrektur-Flag aufweist.

19. Verfahren zum Betrieb nach Anspruch 13, das ferner aufweist:
als Reaktion darauf, dass der SPI-IC (310, 320) der Master-IC der SPI-Architektur ist und der Slave-IC in der SPI-Architektur meldet, dass die ersten Dateninformationen fehlerhaft sind, erneutes Senden der ersten Dateninformationen an den Slave-IC über den SPI-Kanal.

20. Verfahren zum Betrieb nach Anspruch 13, das ferner aufweist:
als Reaktion darauf, dass der SPI-IC (310, 320) der Slave-IC der SPI-Architektur ist und ein Bit der zweiten Dateninformation fehlerhaft ist, das Korrigieren der zweiten Dateninformation unter Verwendung der vierten Debugging-Information.

21. Verfahren zum Betrieb nach Anspruch 20, das ferner aufweist:
als Reaktion darauf, dass der SPI-IC (310, 320) der Slave-IC der SPI-Architektur ist und die vierte Debugging-Information nicht ausreicht, um die fehlerhafte zweite Dateninformation zu korrigieren, den Master-IC der SPI-Architektur anzuweisen, die zweite Dateninformation über den SPI-Kanal erneut zu senden.

22. Verfahren zum Betrieb nach Anspruch 13, wobei die dritte Debugging-Information einen ersten zyklischen Redundanzprüfcode aufweist und die vierte Debugging-Information einen zweiten zyklischen Redundanzprüfcode aufweist.

23. Verfahren zum Betrieb nach Anspruch 13, wobei die erste Dateninformation ein erstes Adressfeld und ein erstes Datenfeld aufweist und die zweite Dateninformation ein zweites Adressfeld und ein zweites Datenfeld aufweist.

24. Verfahren zum Betrieb nach Anspruch 13, wobei die erste Befehlsinformation ein erstes Datenfehlerkorrektur-Flag aufweist, die zweite Befehlsinformation ein zweites Datenfehlerkorrektur-Flag aufweist und das Verfahren zum Betrieb ferner aufweist:
als Reaktion darauf, dass der SPI-IC (310, 320) der Master-IC der SPI-Architektur ist, wird das erste Datenfehlerkorrektur-Flag gesetzt, um den Slave-IC in der SPI-Architektur anzuweisen, einen Fehlerkorrekturvorgang für die ersten Dateninformationen zu aktivieren, oder das erste Datenfehlerkorrektur-Flag zurückgesetzt, um den Slave-IC in der SPI-Architektur anzuweisen, den Fehlerkorrekturvorgang für die ersten Dateninformationen zu deaktivieren;
als Reaktion darauf, dass der SPI-IC (310, 320) der Slave-IC der SPI-Architektur ist, der SPI-IC (310, 320) die vom Master-IC der SPI-Architektur ausgewählte Ziel-Slave-Schaltung ist und das zweite Datenfehlerkorrektur-Flag gesetzt ist, Überprüfung der zweiten Dateninformation unter Verwendung der vierten Debugging-Information; und
als Reaktion darauf, dass der SPI-IC (310, 320) der Slave-IC der SPI-Architektur ist, der SPI-IC (310, 320) die vom Master-IC der SPI- -Architektur ausgewählte Ziel-Slave-Schaltung ist und das zweite Datenfehlerkorrektur-Flag deaktiviert ist, wird die zweite Dateninformation nicht überprüft.

## Revendications

1. Circuit intégré d'interface périphérique série, SPI, ou circuit intégré SPI (310, 320), comprenant :
un circuit central (311, 321) ; et
un circuit de débogage (312, 322), couplé au circuit central (311, 321), dans lequel le circuit intégré SPI (310, 320) est configuré pour être connecté à un bus SPI afin de servir soit de circuit intégré maître dans une architecture SPI, soit de circuit intégré esclave dans ladite architecture SPI,
lorsque le circuit intégré SPI (310, 320) est le circuit intégré maître de l'architecture SPI, le circuit central (311, 321) génère des premières informations de commande destinées au circuit intégré esclave dans l'architecture SPI, le circuit de débogage (312, 322) génère des premières informations de débogage correspondant aux premières informations de commande, et les premières informations de commande ainsi que les premières informations de débogage sont transmises au circuit intégré esclave dans l'architecture SPI via un canal SPI, dans lequel le circuit central (311, 321) génère en outre des premières informations de données correspondant aux premières informations de commande, le circuit de débogage (312, 322) génère des troisièmes informations de débogage correspondant aux premières informations de données, et les premières informations de données ainsi que les troisièmes informations de débogage sont transmises au circuit intégré esclave de l'architecture SPI via le canal SPI,
en réponse au fait que le circuit intégré SPI est le circuit intégré esclave de l'architecture SPI, le circuit de débogage (312, 322) reçoit des deuxièmes informations de commande et des deuxièmes informations de débogage envoyées par le circuit intégré maître via le canal SPI, et le circuit de débogage (312, 322) vérifie les deuxièmes informations de commande à l'aide des deuxièmes informations de débogage, et
du fait que le circuit intégré SPI (310, 320) est le circuit intégré esclave de l'architecture SPI et que ce circuit intégré SPI (310, 320) est un circuit esclave cible sélectionné par le circuit intégré maître de l'architecture SPI, le circuit central (311, 321) exécute les deuxièmes informations de commande envoyées par le circuit intégré maître à condition que ces deuxièmes informations de commande aient été vérifiées par le circuit de débogage (312, 322) et qu'elles soient correctes, le circuit de débogage (312, 322) recevant des deuxièmes informations de données correspondant aux deuxièmes informations de commande envoyées par le circuit intégré maître et recevant des quatrièmes informations de débogage correspondant aux deuxièmes informations de données, le circuit de débogage (312, 322) vérifie les deuxièmes informations de données à l'aide des quatrièmes informations de débogage, et le circuit central (311, 321) traite ensuite les deuxièmes informations de données envoyées par le circuit intégré maître à condition que ces deuxièmes informations de données aient été vérifiées par le circuit de débogage (312, 322) et qu'elles soient correctes.

2. Circuit intégré SPI (310, 320) selon la revendication 1, dans lequel, en réponse au fait que le circuit intégré SPI (310, 320) est le circuit intégré maître de l'architecture SPI et que le circuit intégré esclave de l'architecture SPI signale que la première information de commande est erronée, le circuit central (311, 321) renvoie les premières informations de commande au circuit intégré esclave via le canal SPI.

3. Circuit intégré SPI (310, 320) selon la revendication 1, dans lequel, lorsque le circuit intégré SPI (310, 320) est le circuit intégré esclave de l'architecture SPI et que la deuxième information de commande est vérifiée par le circuit de débogage (312, 322) et s'avère erronée, le circuit de débogage (312, 322) notifie au circuit intégré maître de l'architecture SPI de renvoyer la deuxième information de commande via le canal SPI.

4. Circuit intégré SPI (310, 320) selon la revendication 1, dans lequel les premières informations de débogage comprennent un premier code de correction d'erreurs, et les deuxièmes informations de débogage comprennent un deuxième code de correction d'erreurs.

5. Circuit intégré SPI (310, 320) selon la revendication 1, dans lequel la première information de commande comprend un premier code d'identification de puce et un premier code de commande, et la deuxième information de commande comprend un deuxième code d'identification de puce et un deuxième code de commande.

6. Circuit intégré SPI (310, 320) selon la revendication 5, dans lequel les premières informations de commande comprennent en outre un premier indicateur de correction d'erreur de données, et les secondes informations de commande comprennent en outre un second indicateur de correction d'erreur de données.

7. Circuit intégré SPI (310, 320) selon la revendication 1, dans lequel, en réponse au fait que le circuit intégré SPI (310, 320) est le circuit intégré maître de l'architecture SPI et que le circuit intégré esclave de l'architecture SPI signale que la première information de données est erronée, le circuit central (311, 321) renvoie la première information de données au circuit intégré esclave via le canal SPI.

8. Circuit intégré SPI (310, 320) selon la revendication 1, dans lequel, en réponse au fait que le circuit intégré SPI (310, 320) est le circuit intégré esclave de l'architecture SPI et que le circuit de débogage (312, 322) vérifie qu'un bit de la deuxième information de données est erroné, le circuit de débogage (312, 322) corrige la deuxième information de données à l'aide de la quatrième information de débogage.

9. Circuit intégré SPI (310, 320) selon la revendication 8, dans lequel, lorsque le circuit intégré SPI (310, 320) est le circuit intégré esclave de l'architecture SPI et que le circuit de débogage (312, 322) détermine que l'utilisation de la quatrième information de débogage n'est pas suffisante pour corriger la deuxième information de données comportant une erreur, le circuit de débogage (312, 322) notifie au circuit intégré maître de l'architecture SPI de renvoyer la deuxième information de données via le canal SPI.

10. Circuit intégré SPI (310, 320) selon la revendication 1, dans lequel la troisième information de débogage comprend un premier code de contrôle de redondance cyclique, et la quatrième information de débogage comprend un deuxième code de contrôle de redondance cyclique.

11. Circuit intégré SPI (310, 320) selon la revendication 1, dans lequel la première information de données comprend un premier champ d'adresse et un premier champ de données, et la deuxième information de données comprend un deuxième champ d'adresse et un deuxième champ de données.

12. Circuit intégré SPI (310, 320) selon la revendication 1, dans lequel
les premières informations de commande comprennent un premier indicateur de correction d'erreur de données,
en réponse au fait que le circuit intégré SPI (310, 320) est le circuit intégré maître de l'architecture SPI, le circuit central (311, 321) active le premier indicateur de correction d'erreur de données pour signaler au circuit intégré esclave de l'architecture SPI d'activer une opération de correction d'erreur sur la première information de données, ou le circuit central (311, 321) désactive le premier indicateur de correction d'erreur de données pour signaler au circuit intégré esclave de l'architecture SPI de désactiver l'opération de correction d'erreur sur la première information de données,
la deuxième information de commande comprend un deuxième indicateur de correction d'erreur de données,
lorsque le circuit intégré SPI (310, 320) est le circuit intégré esclave de l'architecture SPI, que ce circuit intégré SPI (310, 320) est le circuit esclave cible sélectionné par le circuit intégré maître de l'architecture SPI, et que le deuxième indicateur de correction d'erreur de données est activé, le circuit de débogage (312, 322) vérifie la deuxième information de données à l'aide de la quatrième information de débogage, et
lorsque le circuit intégré SPI (310, 320) est le circuit intégré esclave de l'architecture SPI, que le circuit intégré SPI (310, 320) est le circuit esclave cible sélectionné par le circuit intégré maître de l'architecture SPI, et que le deuxième indicateur de correction d'erreur de données est désactivé, le circuit de débogage (312, 322) ne vérifie pas les deuxièmes informations de données.

13. Procédé de fonctionnement d'un circuit intégré d'interface périphérique série (SPI), ou circuit intégré SPI (310, 320), comprenant :
le circuit intégré SPI (310, 320) est configuré pour être connecté à un bus SPI afin de servir soit de circuit intégré maître dans une architecture SPI, soit de circuit intégré esclave dans ladite architecture SPI,
lorsque le circuit intégré SPI (310, 320) est le circuit intégré maître de l'architecture SPI,
générer des premières informations de commande destinées au circuit intégré esclave dans l'architecture SPI, générer des premières informations de débogage correspondant aux premières informations de commande, et envoyer les premières informations de commande et les premières informations de débogage au circuit intégré esclave dans l'architecture SPI via un canal SPI ; et
générer des premières informations de données correspondant aux premières informations de commande, générer des troisièmes informations de débogage correspondant aux premières informations de données, et envoyer les premières informations de données et les troisièmes informations de débogage au circuit intégré esclave dans l'architecture SPI via le canal SPI ;
en réponse au fait que le circuit intégré SPI (310, 320) est le circuit intégré esclave de l'architecture SPI, recevoir des deuxièmes informations de commande et des deuxièmes informations de débogage envoyées par le circuit intégré maître via le canal SPI et vérifier les deuxièmes informations de commande à l'aide des deuxièmes informations de débogage ; et
en réponse au fait que le circuit intégré SPI (310, 320) est le circuit intégré esclave de l'architecture SPI et que le circuit intégré SPI (310, 320) est un circuit esclave cible sélectionné par le circuit intégré maître de l'architecture SPI,
exécuter les deuxièmes informations de commande envoyées par le circuit intégré maître à condition que ces deuxièmes informations de commande aient été vérifiées et soient correctes ; et
recevoir des deuxièmes informations de données correspondant aux deuxièmes informations de commande envoyées par le circuit intégré maître et recevoir des quatrièmes informations de débogage correspondant aux deuxièmes informations de données, vérifier les deuxièmes informations de données à l'aide des quatrièmes informations de débogage, et traiter les deuxièmes informations de données envoyées par le circuit intégré maître à condition que les deuxièmes informations de données aient été vérifiées et soient correctes.

14. Procédé de fonctionnement selon la revendication 13, comprenant en outre :
en réponse au fait que le circuit intégré SPI (310, 320) est le circuit intégré maître de l'architecture SPI et que le circuit intégré esclave dans l'architecture SPI signale que les premières informations de commande sont erronées, renvoyer les premières informations de commande au circuit intégré esclave via le canal SPI.

15. Procédé de fonctionnement selon la revendication 13, comprenant en outre :
en réponse au fait que le circuit intégré SPI (310, 320) est le circuit intégré esclave de l'architecture SPI et que la deuxième information de commande a été vérifiée et s'avère erronée, notifier au circuit intégré maître de l'architecture SPI de renvoyer la deuxième information de commande via le canal SPI.

16. Procédé de fonctionnement selon la revendication 13, dans lequel les premières informations de débogage comprennent un premier code de correction d'erreurs, et les deuxièmes informations de débogage comprennent un deuxième code de correction d'erreurs.

17. Procédé de fonctionnement selon la revendication 13, dans lequel les premières informations de commande comprennent un premier code d'identification de puce et un premier code de commande, et les deuxièmes informations de commande comprennent un deuxième code d'identification de puce et un deuxième code de commande.

18. Procédé de fonctionnement selon la revendication 17, dans lequel les premières informations de commande comprennent en outre un premier indicateur de correction d'erreur de données, et les secondes informations de commande comprennent en outre un second indicateur de correction d'erreur de données.

19. Procédé de fonctionnement selon la revendication 13, comprenant en outre :
en réponse au fait que le circuit intégré SPI (310, 320) est le circuit intégré maître de l'architecture SPI et que le circuit intégré esclave de l'architecture SPI signale que les premières informations de données sont erronées, la retransmission des premières informations de données au circuit intégré esclave via le canal SPI.

20. Procédé de fonctionnement selon la revendication 13, comprenant en outre :
en réponse au fait que le circuit intégré SPI (310, 320) est le circuit intégré esclave de l'architecture SPI et qu'un bit de la deuxième information de données est erroné, la correction de la deuxième information de données à l'aide de la quatrième information de débogage.

21. Procédé de fonctionnement selon la revendication 20, comprenant en outre :
en réponse au fait que le circuit intégré SPI (310, 320) est le circuit intégré esclave de l'architecture SPI et que la quatrième information de débogage n'est pas suffisante pour corriger la deuxième information de données comportant une erreur, notifier au circuit intégré maître de l'architecture SPI de renvoyer la deuxième information de données via le canal SPI.

22. Procédé de fonctionnement selon la revendication 13, dans lequel les troisièmes informations de débogage comprennent un premier code de contrôle de redondance cyclique, et les quatrièmes informations de débogage comprennent un deuxième code de contrôle de redondance cyclique.

23. Procédé de fonctionnement selon la revendication 13, dans lequel la première information de données comprend un premier champ d'adresse et un premier champ de données, et la deuxième information de données comprend un deuxième champ d'adresse et un deuxième champ de données.

24. Procédé de fonctionnement selon la revendication 13, dans lequel la première information de commande comprend un premier indicateur de correction d'erreur de données, la deuxième information de commande comprend un deuxième indicateur de correction d'erreur de données, et le procédé de fonctionnement comprend en outre :
en réponse au fait que le circuit intégré SPI (310, 320) est le circuit intégré maître de l'architecture SPI, activer le premier indicateur de correction d'erreur de données pour signaler au circuit intégré esclave de l'architecture SPI d'activer une opération de correction d'erreur sur les premières données, ou réinitialiser le premier indicateur de correction d'erreur de données pour signaler au circuit intégré esclave de l'architecture SPI de désactiver l'opération de correction d'erreur sur les premières données ;
en réponse au fait que le circuit intégré SPI (310, 320) est le circuit intégré esclave de l'architecture SPI, que ce circuit intégré SPI (310, 320) est le circuit esclave cible sélectionné par le circuit intégré maître de l'architecture SPI, et que le deuxième indicateur de correction d'erreur de données est activé, vérifier la deuxième information de données à l'aide de la quatrième information de débogage ; et
en réponse au fait que le circuit intégré SPI (310, 320) est le circuit intégré esclave de l'architecture SPI, que le circuit intégré SPI (310, 320) est le circuit esclave cible sélectionné par le circuit intégré maître de l' architecture SPI, et que le deuxième indicateur de correction d'erreur de données est désactivé, ne pas vérifier la deuxième information de données.
